Europäisches Patentamt

European Patent Office

Office européen des brevets

(19)

(11) Veröffentlichungsnummer : **0 322 552 B1**

(12) # EUROPÄISCHE PATENTSCHRIFT

(45) Veröffentlichungstag der Patentschrift :
**17.05.95 Patentblatt 95/20**

(51) Int. Cl.⁶ : **G01N 27/90**

(21) Anmeldenummer : **88119186.0**

(22) Anmeldetag : **18.11.88**

(54) **Vorrichtung zum Prüfen von Halbzeug.**

(30) Priorität : **22.12.87 DE 3743521**

(43) Veröffentlichungstag der Anmeldung :
**05.07.89 Patentblatt 89/27**

(45) Bekanntmachung des Hinweises auf die
Patenterteilung :
**17.05.95 Patentblatt 95/20**

(84) Benannte Vertragsstaaten :
**DE FR GB IT SE**

(56) Entgegenhaltungen :
**DE-A- 3 530 525**
**US-A- 4 383 218**
**US-A- 4 602 212**

(73) Patentinhaber : **Institut Dr. Friedrich Förster**
**Prüfgerätebau GmbH & Co. KG**
**In Laisen 70**
**D-72766 Reutlingen (DE)**

(72) Erfinder : **Klopfer, Walter**
**Orchideenweg 11**
**D-7406 Mössingen 5 (DE)**
Erfinder : **Haug, Fritz**
**Teckstrasse 5**
**D-7401 Pliezhausen 1 (DE)**
Erfinder : **Gabauer, Dale**
**RD1**
**Freedom, PA 15042 (US)**
Erfinder : **Workley, Jim**
**628, Walden Way**
**Imperial, PA 15126 (US)**

(74) Vertreter : **Patentanwälte Ruff, Beier,**
**Schöndorf und Mütschele**
**Willy-Brandt-Strasse 28**
**D-70173 Stuttgart (DE)**

EP 0 322 552 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Prüfen von langgestrecktem metallischem Prüfgut auf in dem Prüfgut enthaltene Fehler nach dem Oberbegriff des Anspruchs 1. Mit der Wirbelstromprüfung prüft man bekanntlich seit langem eine Vielfalt von Halbzeug, wie Drähte, Stangen, Rohre. Insbesondere finden solche Prüfungen statt, nachdem das Prüfgut eine formgebende Verarbeitung erfahren hat, etwa in einem Walzwerk oder dergleichen. Die Prüfung ermöglicht das Auffinden von Rissen, Lunkern, Überwalzungen, Schalen und anderen Fehlern, soweit diese sich an oder unmittelbar unter der Oberfläche des Prüfgutes befinden. Eine besondere Rolle bei den gesuchten Fehlern spielen Einschlüsse aus ferromagnetischem Material, zum einen, weil ihr Auftreten auf Mängel an den formgebenden Werkzeugen hinweist, etwa auf Verschleißerscheinungen an Walzen, deren absplitternde Teilchen in das Halbzeug eingewalzt worden sind, zum anderen, weil Einschlüsse aus ferromagnetischem Material bei der Weiterverarbeitung metallischen Halbzeuges den Anlaß zu schwerwiegenden Fehlern bilden können und insbesondere beim Ziehen des Halbzeuges auf immer kleinere Durchmesser zwangsläufig Aufspaltungen, Brüche und dergleichen verursachen, ja sogar zu Beschädigungen des Ziehwerkzeuges führen können.

Zwei Gründe lassen die alleinige Verwendung des Wirbelstromverfahrens für die Erfassung der eingangs erwähnten Einschlüsse als unzureichend erscheinen. Zunächst einmal hindert der Skineffekt die Wirbelströme daran, tiefer ins Material einzudringen. Bereits ein wenig unterhalb der Oberfläche liegende Einschlüsse kommen daher nicht mehr zur Anzeige. Zwar kann man die Eindringtiefe durch Erniedrigen der Prüffrequenz etwas verbessrn. Dies geht jedoch auf Kosten der Erkennbarkeit von Oberflächenfehlern und vermindert die mögliche Prüfgeschwindigkeit. Der zweite Grund beruht darauf, daß neben den bis zur Oberfläche reichenden Einschlüssen auch andere Kategorien von Oberflächenfehlern von der Wirbelstromprüfung erfaßt werden. Der Zusammenhang der Bedeutung eines Fehlers mit der zugehörigen Signalspannung ist jedoch sehr unterschiedlich, je nachdem ob es sich um Einschlüsse oder sonstige Fehler handelt. Eine eindeutige Beurteilung der Bedeutung von Fehlern ist daher nicht mehr möglich, wenn verschiedene Kategorien gleichermaßen auftreten können.

Es ist ein anderes physikalisches Verfahren bekannt, mit dessen Hilfe die Ermittlung von Einschlüssen ferrogmagnetischen Materials in metallischem Halbzeug möglich ist. Läßt man das Halbzeug eine Spule durchlaufen, in deren Bereich ein kräftiges magnetisches Gleichfeld aufgebaut ist, so wirken die Spule durchlaufende ferromagnetische Teilchen wie ein magnetischer Dipol und induzieren in der Spule eine elektrische Spannung

$$V = n \cdot d\,phi\,/\,dt, \quad (1)$$

wobei n die Anzahl der Windungen der Spule und phi der die Spule durchdringende vom Dipol herrührende magnetische Fluß ist.

Mit einer entsprechenden Anordnung läßt sich nun zwar sehr gut die Anwesenheit von Einschlüssen aus ferromagnetischem Material in metallischem Halbzeug nachweisen, nicht jedoch das Vorhandensein irgendwelcher anderer Oberflächenfehler, die durch das Wirbelstromverfahren leicht zu erkennen wären.

Aus der US-A-4 602 212 ist eine Vorrichtung mit rotierendem Streufluß-Prüfkopf für ferromagnetische Stahlrohre bekanntgeworden. Die Vorrichtung enthält ferner ringförmige Spulen, die mit Gleichspannung gespeist werden, die ein axiales magnetisches Feld am äußeren Umfang des Prüfgutes erzeugen. Zwei unterschiedliche Detektoren nehmen die Signale beider Magnetisierungs-Verfahren auf und führen sie einer gesonderten Auswertung zu. Die Detektierung der Signale aus beiden Magnetisierungsverfahren dient zur Ermittlung unterschiedlich gerichteter Fehler.

Aus der DE-35 30 525 A1 ist eine Vorrichtung bekanntgeworden, bei der eine Ultraschall- und Wirbelstromprüfung gleichzeitig durchgeführt wird. Dazu ist der Geber mit einer zusätzlichen Empfangsspulenanordnung für die Wirbelstromprüfung ausgerüstet. Die Empfangsspulenanordnung kann aus zwei in Differenz geschalteten Einzelspulen bestehen.

Aufgabe der Erfindung ist es, eine Vorrichtung zu schaffen, mit deren Hilfe in nicht-ferromagnetischem Prüfgut ferromagnetische Einschlüsse und auch sonstige Fehler gleichzeitig detektiert werden können.

Diese Aufgabe wird gelöst durch eine Vorrichtung nach Anspruch 1.

Die erfindungsgemäße Lösung macht es möglich, zwei unterschiedliche physikalische Verfahren in einer gemeinsamen Vorrichtung anzuwenden, die gegenüber dem Bekannten durch nur wenige einfache Mittel ergänzt worden ist. So können insbesondere die Prüfspulenanordnung und die Mittel zum Auswerten der Signalspannungen gemeinsam für beide Verfahren benutzt werden. Als besonders vorteilhaft erweist sich die gemeinsame Verwendung nur einer Prüfspulenanordnung sowohl für das Wirbelstrom- als auch für das Induktionsverfahren, wenn es um den nachträglichen Einbau in eine vorhandene Produktionslinie geht, wo aus Raumgründen das Einfügen von zwei Prüfspulenanordnungen häufig schwierig, wenn nicht unmöglich sein kann. Nach einer Ausgestaltung der Erfindung werden die Wirbelstrommessungs- und Gleichfeldmessungs-Signalspannungen durch einen Tiefpaß voneinander getrennt. Nach einer anderen Ausgestaltung wird für die Wirbelstrommessungs- und Gleichfeldmessungs-Signalspannungen ein gemeinsamer Vorverstärker benutzt. Eine weitere Ausgestaltung der Erfindung besteht darin, daß als Magnetisierungsmittel ein in der Wirbelstromprüftechnik gebräuchliches Magnetjoch eingesetzt wird, das sonst nur zur magnetischen Sättigung ferromagnetischer Prüfteile benutzt wird. Andere Vorteile und Ausgestaltungen der Erfindung ergeben sich aus Beschreibung und Patentansprüchen.

Im folgenden wird die Erfindung an Hand von einigen Figuren und durch ein Ausführungsbeispiel näher erläutert. Es zeigen im einzelnen:

Figur 1        das Blockschaltbild einer Prüfvorrichtung,

Figur 2        ein Magnetisierungsjoch mit darin gehalterter Prüfspulenanordnung,

Figur 3        die Letztere gesondert.

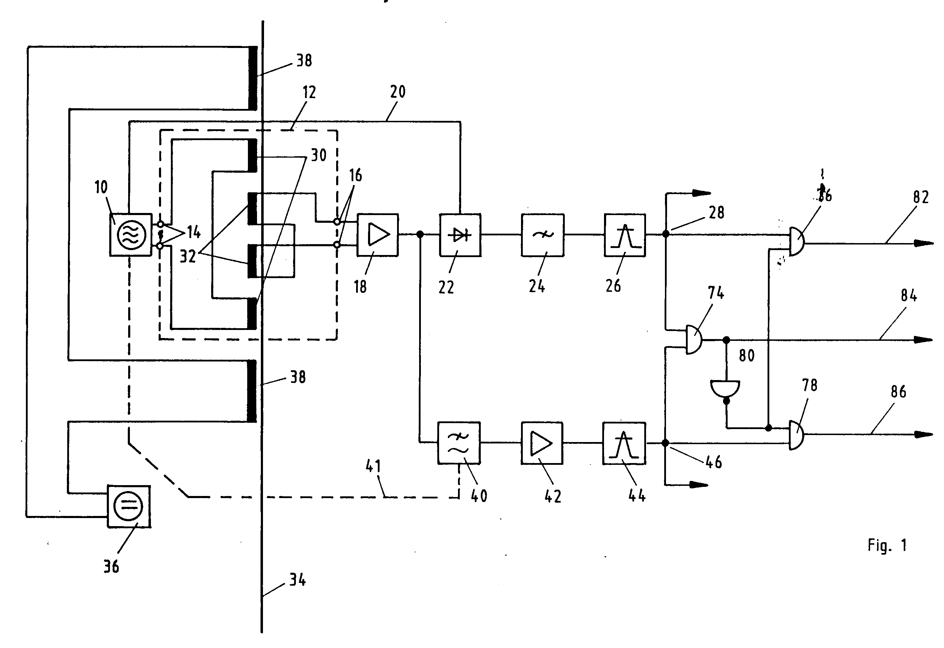

Im Blockschaltbild nach Figur 1 ist eine für sich allein bekannte Einrichtung zum Prüfen von Metallen nach dem Wirbelstromverfahren enthalten. Diese besteht aus einem Wechselstromgenerator 10 mit umschaltbarer Frequenz, einer Prüfspulenanordnung 12, deren Eingang 14 vom Generator 10 mit einem Wechselstrom der gewählten Frequenz gespeist wird, einem Vorverstärker 18, der an den Ausgang 16 der Prüfspulenanordnung 12 angeschlossen ist, einem über Leitung 20 vom Generator 10 gesteuerten phasenselektiven Gleichrichter 22, der die in der Prüfspulenanordnung 12 entstandene, vom Vorverstärker 18 verstärkte Singalspannung demoduliert, einer Filteranordnung 24, in der unerwünschte Bestandteile der Signalspannung unterdrückt werden und einer Signalspannungsschwelle 26, die beim Überschreiten einer bestimmten Schwellenspannung durch die Signalspannung ein binäres Signal an ihrem Ausgang 28 entstehen läßt.

Die Prüfspulenanordnung 12 besitzt zwei Erregerspulen 30 und zwei Empfängerspulen 32, die jeweils vom Prüfgut, einem Draht 34 aus nicht-ferromagnetischem Metall durchlaufen werden. Der in den Erregerspulen 30 fließende Wechselstrom aus Generator 10 baut ein magnetisches Wechselfeld auf, das den Draht 34 durchsetzt und in ihm Wirbelströme hervorruft. Diese haben ihrerseits Magnetfelder zur Folge, die in den Empfängerspulen 32 Spannungen induzieren. Da die beiden Letzteren in entgegengesetztem Wicklungssinn hintereinander geschaltet sind, heben sich die in ihnen induzierten Spannungen solange heraus, wie sich im zu untersuchenden Draht 34 keine Oberflächenfehler befinden. Die Spulenanordnung 12 durchlaufende Oberflächenfehler des Drahtes 34 beeinflussen die Ausbildung der Wirbelströme und bewirken damit in den Empfängerspulen 32 Spannungsänderungen, die sich deshalb nicht herausheben, weil sie zu unterschiedlichen Zeiten in den beiden Spulen auftreten. Bei entsprechender Größe eines solchen Fehlers überschreitet die zugehörige Signalspannung die Schwellenspannung in der Signalspannungsschwelle 26, so daß an deren Ausgang 28 ein binäres Signal erzeugt wird.

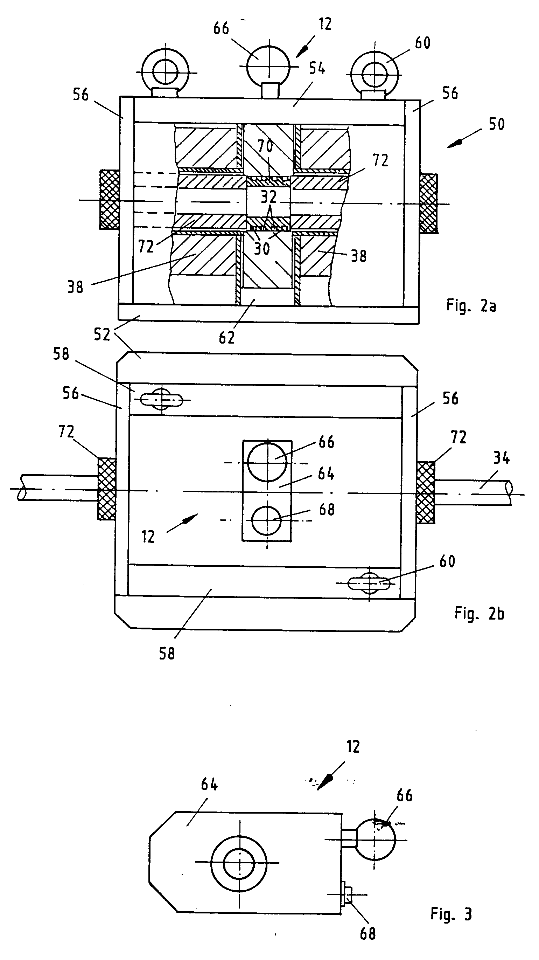

Den Aufbau der Prüfspulenanordnung 12 und eines zusätzlich vorgesehenen Magnetisierungsjochs 50, das gleichzeitig zur Halterung der Prüfspulenanordnung 12 dient, kann man am besten aus den Figuren 2a, 2b und 3 ersehen. Die Figuren 2a und 2b zeigen das Magnetisierungsjoch 50 mit eingebauter Prüfspulenanordnung 12 in teilweise geschnittener Seitenansicht bzw. in Draufsicht, Figur 3 zeigt die Prüfspulenanordnung 12 gesondert in einer Seitenansicht. Das Gehäuse des Magnetisierungsjochs 50 setzt sich zusammen aus einer Bodenplatte 52, einer Deckplatte 54, zwei Seitenplatten 56 und zwei Wandplatten 58, jeweils aus ferromagnetischem Werkstoff. Zwei an der Deckplatte 54 befestigte Trägösen 60 dienen der Beförderung. Beiderseits einer Öffnung 62 befinden sich zwei Magnetisierungsspulen 38, die elektrisch in Serie geschaltet sind und an eine Gleichstromquelle 36 angeschlossen sind. In die Öffnung 62, die ihre Fortsetzung in einer Aussparung der Deckplatte 54 findet, ist die Prüfspulenanordnung 12 eingesteckt. Die Letztere besteht aus einem Gehäuse 64, einem Griff 66, einer Anschlußbuchse 68 und einem Spulenkörper 70 mit vier darin eingearbeiteten Wickelfugen, in die die Erregerspulen 30 und die Empfängerspulen 32 gebettet sind. Diese sind, wie schon oben dargestellt untereinander verbunden und über die Anschlußbuchse 68 und ein nicht abgebildetes Kabel an den Generator 10 bzw. den Eingang des Verstärkers 18 angeschlossen. In den Durchlaßöffnungen der Spulen 38 stecken auswechselbare Führungsdüsen 72 aus ferromagnetischem Werkstoff, die zwei Aufgaben dienen. Zum einen sollen sie den zu prüfenden Draht 34, wie schon der Name sagt, führen und so die Bohrung des Spulenkörpers 70 vor Verschleiß und Beschädigung schützen. Sie sind zu diesem Zweck in verschiedenen, dem jeweiligen Durchmesser des Drahtes 34 angepaßten Bohrungsdurchmessern erhältlich. Zum anderen leiten sie den vom Magnetfeld der Spulen 38 herrührenden Magnetfluß in Verbindung mit den ferromagnetischen Platten 52 bis 58 optimal in den Bereich der Spulen 32.

Die Empfängerspulen 32 übernehmen neben ihrer oben beschriebenen Zweckbestimmung als Wirbelstromspulen eine zusätzliche Aufgabe. Die im Draht 34 eingeschlossenen, die Spulen 32 durchlaufenden ferromagnetischen Teilchen werden vom Magnetfeld der Magnetisierungsspulen 38 magnetisiert und rufen Magnetflußänderungen hervor, die in den Spulen 32 eine Signalspannung induzieren. Grundsätzlich genügt dazu eine einfache Spule 32. Die Verwendung zweier in Differenz geschalteter gleich aufgebauter Spulen erbringt den Vorteil, daß von Störfeldern hervorgerufene Spannungen, z. B. von Störfeldern des Versorgungsnetzes, sich in den beiden Spulen 32 herausheben. Ferromagnetische Teilchen induzieren, in Analogie zu den von Oberflächenfehlern verursachten Wirbelstromsignalspannungen, zu unterschiedlichen Zeiten in den beiden Spulen 32 Signalspannungen entgegengesetzter Polarität, die als zusammengesetzte Signalspannung an den Klemmen 16 auftreten.

Anstelle des im vorliegenden Beispiel beschriebenen Magnetisierungsjoches 50 mit den zwei Magnetisierungsspulen 38 und der Gleichstromquelle 36 kann ebenso ein Magnetisierungsjoch mit einem oder mehreren Permanentmagneten zur Erzeugung des erforderlichen magnetischen Gleichfeldes eingesetzt werden. Man kann dabei in vorteilhafter Weise von solchen Magnetisierungsjochen Gebrauch machen, die wie Magnetjoch 50 in der Wirbelstromprüftechnik zur magnetischen Sättigung ferromagnetischer Prüfteile vorgesehen sind, wenn es darum geht, durch magnetische Sättigung den Einfluß der magnetischen Permeabilität auszuschalten.

Die Signalspannungen an den Klemmen 16 der Prüfspulenanordnung 12, also sowohl die auf Wirbelströmen als auch die auf einfacher Induktion beruhenden, werden im Vorverstärker 18 gemeinsam verstärkt. Der Ausgang des Vorverstärkers 18 ist mit dem Eingang eines Tiefpaßfilters 40 verbunden. Dieses ist so ausgelegt, daß in ihm die Reste der Trägerfrequenz des Generators 10 vollständig unterdrückt werden. Dazu ist das Tiefpaßfilter 40 in seiner Grenzfrequenz umschaltbar. Die Umschaltung erfolgt, wie durch eine gestrichelte Linie 41 angedeutet, gekoppelt mit der Umschaltung der Prüffrequenz des Generators 10, so daß für eine gewählte Prüffrequenz auch gleichzeitig die dazu passende Grenzfrequenz des Tiefpaßfilters 40 eingestellt ist. An den Ausgang des Tiefpaßfilters 40 ist ein Verstärker 42 angeschlossen, an dessen Ausgang wiederum eine Signalspannungsschwelle 44. Überschreitet die Signalspannung einen vorgegebenen Betrag, so entsteht am Ausgang 46 der Signalspannungsschwelle 44 ein binäres Signal. Dieses soll anzeigen, daß die Prüfspulenanordnung 12 von einem ferromagnetischen Einschluß im Draht 34 durchlaufen worden ist.

Ein Signal am Ausgang 28 des Wirbelstromkanales sagt aus, daß eine Inhomogenität an der Oberfläche des Drahtes 34 die Prüfspule 32 durchlaufen hat. Dies kann naturgemäß auch ein die Oberfläche des Drahtes 34 berührendes Teilchen aus ferromagnetischem Werkstoff gewesen sein. Dem gegenüber bekundet ein Signal am Ausgang 46 des Induktionskanales, daß ausschließlich ein ferromagnetisches Teilchen, gleichgültig ob an oder unter der Oberfläche des Drahtes 34, die Prüfspule passiert hat. Die Signale an den beiden Ausgängen 28, 46 können auf die verschiedenste Weise ausgewertet werden. Es kann eine Zählung der Signale pro Drahtbündel und/oder pro Längeneinheit stattfinden. Eine Farbmarkierung fehlerhafter Stellen beider Kategorien ist möglich, ebenso der Einsatz einer akustischen oder optischen Meldeeinrichtung. Bei der möglicherweise anfallenden großen Menge von Daten erscheint eine rechnergestützte Datenverarbeitung angebracht, insbesondere wenn es auch um die Verknüpfung der Signale der beiden Ausgänge 28 und 46 geht.

Ein einfaches Beispiel für eine solche Verknüpfung beider Signale ist in Figur 1 dargestellt. Die Ausgänge 28 und 46 sind mit den beiden Eingängen eines Und-Gatters 74 sowie mit jeweils einem Eingang der Und-Gatter 76, 78 verbunden. Jeweils ein weiterer Eingang der bei Und-Gatter 76, 78 ist über ein Negierglied 80 an den Ausgang des Und-Gatters 74 angeschlossen. Damit ergeben sich drei weitere Ausgänge 82, 84, 86. Am Ausgang 82 steht ein Signal, wenn ein solches ausschließlich am Ausgang 28 vorliegt, d. h. wenn der angezeigte Fehler in einer reinen Materialtrennung oder Inhomogenität der Drahtoberfläche, nicht in einem ferromagnetischen Teilchen besteht. Ein Signal am Ausgang 86 zeigt an, daß ausschließlich am Ausgang 46 ein Signal vorliegt, daß also ein ferromagnetischer Einschluß unterhalb der Drahtoberfläche gemeldet werden soll. Erscheint am Ausgang 84 ein Signal, so sagt dieses aus, daß ein ferromagnetisches Teilchen mit Oberflächenberührung die Prüfspule 12 durchlaufen hat. Es zeigt sich also, daß bereits eine ganz einfache Verknüpfung der Signale des Wirbelstrom- und des Induktionskanals zu einer differenzierten Aussage über die Fehlerart führen kann.

## Patentansprüche

1. Vorrichtung zum Prüfen von langgestrecktem metallischem Prüfgut (34) auf in dem Prüfgut enthaltene Fehler

a) mit einer das Prüfgut (34) umfassenden Prüfspulenanordnung (12) zum Erzeugen von Wirbelströmen im Prüfgut (34) und

b) zum Empfangen von Wirbelstrommessungs-Signalspannungen, die aufgrund von Rückwirkungen der Wirbelströme auf die Prüfspulenanordnung (12) in der letzteren entstehen,

c) mit einem Wechselstromgenerator (10), der den Eingang (14) der Prüfspulenanordnung (12) mit einem die Wirbelströme hervorrufenden Wechselstrom speist,

d) mit an den Ausgang (16) der Prüfspulenanordnung (12) geschalteten Wirbelstrommessungs-Auswertungsmitteln (18 - 26) zum Verarbeiten und Auswerten der Wirbelstrommessungs-Signalspannungen,

e) mit zusätzlichen Magnetisierungsmitteln (36, 38), die den sich innerhalb der Prüfspulenanordnung (12) befindlichen Bereich des Prüfgutes (34) einer konstanten Gleichfeldmagnetisierung unterwerfen,

f) mit einer gleichfalls an den Ausgang (16) der Prüfspulenanordnung (12) geschalteten Gleichfeldmessungs-Auswertungsmitteln (42, 44) zum Verarbeiten der Gleichfeldmessungs-Signalspannung,

dadurch gekennzeichnet, daß

g) an den Ausgang der stillstehenden Prüfspulenanordnung (12) eine Frequenzweiche (40) angeschlossen ist,

h) durch die von den zur Fehlererkennung im nichtferromagnetischen Prüfgut (34) ausgewerteten Wirbel strommessungs-Signalspannungen die zum gleichzeitigen Erkennen von ferromagnetischen Einschlüssen im Prüfgut auszuwertenden, von der kräftigen Gleichfeldmagnetisierung herrührenden Gleichfeldmessungs-Signalspannungen abgetrennt werden.

2. Vorrichtung nach Anspruch 1, dadurch gekennzeichnet, daß die Prüfspulenanordnung (12) zwei in Durchlaufrichtung beabstandete Empfängerspulen (32) aufweist, die in Differenz geschaltet sind.

3. Vorrichtung nach Anspruch 1 oder 2, dadurch gekennzeichnet, daß als Frequenzweiche ein Tiefpaßfilter (40) dient, das vor die Gleichfeldmessungsmittel (42, 44) zum Verarbeiten und Auswerten der Gleichfeldmessungs-Signalspannungen geschaltet ist.

4. Vorrichtung nach Anspruch 3, dadurch gekennzeichnet, daß die Frequenz des Wechselstromgenerators (10) und die Grenzfrequenz des Tiefpaßfilters (40) einstellbar sind und daß die Einstellung der beiden Frequenzen durch ein gemeinsames Einstellorgan (41) erfolgt.

5. Vorrichtung nach einem der vorhergehenden Ansprüche, dadurch gekennzeichnet, daß die Wirbelstrommessungs- und Gleichfeldmessungs-Signalspannungen einen gemeinsamen Vorverstärker (18) durchlaufen.

6. Vorrichtung nach einem der vorhergehenden Ansprüche, dadurch gekennzeichnet, daß als Magnetisierungsmittel ein in der Wirbelstromprüftechnik gebräuchliches Magnetjoch (50) eingesetzt wird, das sonst nur zur magnetischen Sättigung ferromagnetischer Prüfteile benutzt wird.

7. Vorrichtung nach einem der vorhergehenden Ansprüche, dadurch gekennzeichnet, daß die Magnetisierungsmittel in einem Magnetjoch mit einem oder mehreren Permanentmagneten bestehen.

8. Vorrichtung nach einem der vorhergehenden Ansprüche, dadurch gekennzeichnet, daß von den Wirbelstrommessungsund Gleichfeldmessungs-Signalspannungen in Schwellwertstufen (26, 44) beim Überschreiten einer Spannungsschwelle Wirbelstrommessungs- und Gleichfeldmessungs-Signale abgeleitet werden, die durch Verknüpfungsglieder (74 - 80) miteinander logisch verknüpft werden.

## Claims

1. Device for testing elongated, metallic material (34) for faults contained in the latter:

a) having a test coil arrangement (12) surrounding the test material (34) for generating eddy currents in the material (34) and

b) for receiving eddy current measurement signal voltages, which occur in the test coil arrangement (12) due to the reactions of eddy currents thereon,

c) with an alternating current generator (10), which supplies the input (14) of the test coil arrangement (12) with an alternating current causing the eddy currents,

d) with eddy current measurement evaluation means (18 - 26) connected to the output (16) of the test coil arrangement (12) for the processing and evaluating of the eddy current measurement signal voltages,

e) with additional magnetizing means (36,38), which subject the area of the test material (34) located within the test coil arrangement (12) to a constant d.c. field magnetization,

f) with d.c. field measurement evaluating means (42,44) also connected to the output (16) of the test coil arrangement (12) for processing the d.c. field measurement signal voltage,

characterized in that,

g) to the output of the stationary test coil arrangement (12) is connected a frequency-dividing network (40),

h) from the eddy current measurement signal voltages evaluated in the non-ferromagnetic test material (34) for fault detection are separated the d.c. field measurement signal voltages resulting from the powerful d.c. field magnetization and to be evaluated for the simultaneous detection of ferromagnetic inclusions in the test material.

2. Device according to claim 1, characterized in that the test coil arrangement (12) has two receiver coils (32), which are differentially connected and spaced from one another in the passage direction.

3. Device according to claim 1 or 2, characterized in that the frequency-dividing network is constituted by a low-pass filter (40), which is connected upstream of the d.c. field measuring means (42,44) for processing and evaluating the d.c. field measurement signal voltages.

4. Device according to claim 3, characterized in that the frequency of the a.c. generator (10) and the limit frequency of the low-pass filter (40) are adjustable and that the adjustment of the two frequencies takes place by a common adjustment member (41).

5. Device according to one of the preceding claims, characterized in that the eddy current measurement and d.c. field measurement signal voltages pass through a common preamplifier (18).

6. Device according to one of the preceding claims, characterized in that the magnetizing means are constituted by a magnet yoke (50) conventionally used in eddy current testing technology, but which is otherwise only used for the magnetic saturation of ferromagnetic test parts.

7. Device according to one of the preceding claims, characterized in that the magnetizing means comprise a magnet yoke with one or more permanent magnets.

8. Device according to one of the preceding claims, characterized in that eddy current measurement and d.c. field measurement signals, which are logically interconnected by interconnecting members (74-80) and derived from the eddy current measurement and d.c. field measurement signal voltages in threshold value stages (26,44) on exceeding a voltage threshold.

## Revendications

1. Dispositif pour tester un produit métallique (34) s'étendant en longueur afin d'y déceler la présence éventuelle de défauts,

   a) avec un ensemble de bobines de test (12) entourant le produit testé (34) et destiné à produire des courants de Foucault dans le produit testé (34)

   b) et à recevoir des tensions de signalisation de la mesure des courants de Foucault, tensions qui apparaissent dans l'ensemble de bobines de test (12) suite aux répercussions des courants de Foucault sur cet ensemble,

   c) avec une génératrice de courant alternatif (10), qui alimente l'entrée (14) de l'ensemble de bobines de test (12) en courant alternatif produisant les courants de Foucault,

   d) avec des moyens évaluateurs (18 à 26) de la mesure des courants de Foucault, connectés à la sortie (16) de l'ensemble de bobines de test (12) et destinés à traiter et évaluer les tensions de signalisation de la mesure des courants de Foucault,

   e) avec des moyens supplémentaires de magnétisation (36,38), qui soumettent à une magnétisation continuelle à champ continu la région du produit testé (34) qui se trouve à l'intérieur de l'ensemble de bobines de test (12),

   f) avec des moyens évaluateurs (42, 44) de la mesure du champ continu, également connectés à la sortie (16) de l'ensemble de bobines de test (12) et destinés à traiter les tensions de signalisation de la mesure du champ continu,

   **caractérisé** en ce que

   g) un filtre d'aiguillage (40) est raccordé à la sortie de l'ensemble stationnaire de bobine de test (12),

   h) filtre qui sépare, des tensions de signalisation de la mesure des courants de Foucault évaluées pour déceler des défauts dans le produit testé (34) non ferromagnétique, les tensions de signalisation de la mesure du champ continu qui proviennent de la puissante magnétisation à champ continu et doivent être évaluées pour déceler en même temps des inclusions ferromagnétiques dans le produit testé.

2. Dispositif selon la revendication 1, **caractérisé** en ce que l'ensemble de bobines de test (12) présente deux bobines réceptrices (32) qui sont mutuellement distantes dans la direction de passage et sont reliées en montage différentiel.

3. Dispositif selon la revendication 1 ou 2, **caractérisé** en ce qu'un filtre passe-bas (40) sert de filtre d'aiguillage, qui est connecté avant les moyens évaluateurs (42, 44) de la mesure du champ continu, destinés à traiter et évaluer les tensions de signalisation de la mesure du champ continu.

4. Dispositif selon la revendication 3, **caractérisé** en ce que la fréquence de la génératrice de courant alternatif (10) et la fréquence limite du filtre passe-bas (40) sont réglables, et en ce que le réglage des deux fréquences s'effectue par un organe de réglage commun (41).

5. Dispositif selon l'une des revendications précédentes, **caractérisé** en ce que les tensions de signalisation de la mesure des courants de Foucault et les tensions de signalisation de la mesure du champ continu passent par un préamplificateur commun (18).

6. Dispositif selon l'une des revendications précédentes, **caractérisé** en ce qu'on utilise comme moyens de magnétisation une culasse magnétique (50) habituelle dans la technique de contrôle par courants de Foucault, qui n'est par ailleurs utilisée que pour la saturation magnétique de pièces testées ferromagnétiques.

7. Dispositif selon l'une des revendications précédentes, **caractérisé** en ce que les moyens de magnétisation consistent en une culasse magnétique avec un ou plusieurs aimants permanents.

8. Dispositif selon l'une des revendications précédentes, **caractérisé** en ce que, dans des étages de seuil (26, 44), on dérive des tensions de signalisation de la mesure des courants de Foucault et de la mesure du champ continu, en cas de dépassement d'un seuil de tension, des signaux de mesure des courants de Foucault et de mesure du champ continu qui sont combinés entre eux par des éléments logiques (74 - 80).

Fig. 1

Fig. 2a

Fig. 2b

Fig. 3